# NEUE EUROPÄISCHE PATENTSCHRIFT

(11) **EP 2 229 262 B2**
(45) Veröffentlichungstag und Bekanntmachung des Hinweises auf die Entscheidung über den Einspruch: **11.02.2015**
(45) Hinweis auf die Patenterteilung: 15.06.2011
(21) Anmeldenummer: 08861214.8
(22) Anmeldetag: 11.12.2008
(51) Int. Cl.: B25J 9/16

(54) **POSITIONSERMITTLUNG EINES OBJEKTES**
DETERMINING THE POSITION OF AN OBJECT
DÉTERMINATION DE LA POSITION D'UN OBJET

(30) Priorität: 15.12.2007 DE 102007060653
(43) Veröffentlichungstag der Anmeldung: 22.09.2010
(73) Patentinhaber: ABB AG, 68309 Mannheim (DE)
(72) Erfinder: DAI, Fan, 64673 Zwingenberg (DE)
(86) Internationale Anmeldenummer: PCT/EP2008/010517
(87) Internationale Veröffentlichungsnummer: WO 2009/077118

(56) Entgegenhaltungen:
- EP-A- 1 428 634
- EP-A- 1 442 848
- EP-A- 1 589 483
- EP-A2- 0 947 898
- EP-B1- 0 380 513
- US-A- 4 853 771
- US-A- 4 907 169
- US-A- 4 907 169
- US-A- 5 521 843
- WIJESOMA S W ET AL: "EYE-TO-HAND COORDINATION FOR VISION-GUIDED ROBOT CONTROL APPLICATIONS" INTERNATIONAL JOURNAL OF ROBOTICS RESEARCH, SAGE SCIENCE PRESS, THOUSAND OAKS, US, Bd. 12, Nr. 1, 1. Februar 1993 (1993-02-01), Seiten 65-77, XP000336656 ISSN: 0278-3649
- SMITH C E ET AL: "GRASPING OF STATIC AND MOVING OBJECTS USING A VISION-BASED CONTROL APPROACH" PROCEEDINGS OF THE 1995 IEEE/RSJ INTERNATIONAL CONFERENCE ON INTELLIGENT ROBOTS AND SYSTEMS. IROS 95. HUMAN ROBOT INTERACTION AND COOPERATIVE ROBOTS. PITTSBURGH, AUG. 5 - 9, 1995; [PROCEEDINGS OF THE IEEE/RSJ INTERNATIONAL CONFERENCE ON INTELLIGENT R, 5. August 1995 (1995-08-05), Seiten 329-334, XP000740909 ISBN: 978-0-7803-3006-1
- STEVEN WEST: "Vision-Guided Robotics: Robots That See and Reason" ABB ROBOTICS INSIGHTS, August 2007 (2007-08), XP002520662 http://www.roboticsinsights.com/Robotics_I nsights_0807int.htm
- SETH HUTCHINSON ET AL: "A Tutorial on Visual Servo Control", IEEE TRANSACTIONS ON ROBOTICS AND AUTOMATION, IEEE INC, NEW YORK, US, vol. 12, no. 5, 1 October 1996 (1996-10-01), XP011053146, ISSN: 1042-296X

## Beschreibung

Die Erfindung betrifft ein Verfahren zur Ermittlung der Position wenigstens eines innerhalb eines Arbeitsbereiches eines Roboters befindlichen bestimmten Objektes durch ein Auswertesystem, wobei mit einer am Roboter befestigten Kamera ein Bild von wenigstens einem Teil des Arbeitsbereichs des Roboters erstellt wird. Der Begriff Objekt umfasst in diesem Zusammenhang ein Werkstück oder einen Gegenstand, welcher sich beispielsweise in losem Zustand auf einer Ablagefläche oder in einem Behälter befindet und geeignet ist, mittels eines dafür vorgesehenen Werkzeuges aufgenommen zu werden.

Es ist allgemein bekannt, dass zur automatischen Ermittlung der Position eines Objektes in einem Arbeitsbereich eines Roboters Bilder verwendet werden, welche von einer oder mehreren Kameras erstellt werden. Dabei werden auch Bilder des Arbeitsbereiches aus verschiedenen Perspektiven verwendet. Dies ermöglicht einerseits eine prinzipiell uneingeschränkte räumliche Betrachtung des Arbeitsbereiches und andererseits aufgrund teilredundanter Bildinformation beispielsweise auch das Betrachten eines nur aus einer bestimmten Perspektive einsehbaren Teil des Arbeitsbereiches des Roboters. Der Aufwand für die Ermittlung der Position eines im Arbeitsbereich des Roboters befindlichen Objektes anhand der Bilddaten einer oder mehrerer Bilder wird bei gleichzeitigem Vorliegen der zugehörigen Koordinaten und Orientierung der jeweiligen Kamera zum Zeitpunkt der Erstellung des jeweiligen Bildes deutlich reduziert.

Unter Einbeziehung verschiedener Randbedingungen, beispielsweise der Kenntnis einer Ebene, in der sich ein flaches und nicht durch weitere Objekte verdecktes Objekt befindet, ist eine Positionserkennung dieses Objektes im Raum grundsätzlich auch nur anhand eines einzigen Bildes denkbar, was allerdings eher selten einen praxisrelevanten Fall darstellt.

Es sind sowohl Anordnung von einer oder mehreren fest im Umfeld des Roboters installierten Kameras bekannt, welche aus verschiedenen unveränderlichen Perspektiven Bildaufnahmen von einem Arbeitsbereich des Roboters erstellen, als auch Varianten mit einer oder auch mehreren auf dem Roboter montierten Kameras.

Für den Fall eines automatischen roboterbasierten Systems, welches automatisch die Position eines im Arbeitsbereich des Roboters befindlichen losen Objektes erkennt, dieses anschließend mit einem an dem Roboter montierten Greifwerkzeug greift und an einen anderen Punkt im Arbeitsbereich des Roboters transportiert, erweist sich die Anordnung einer einzelnen Kamera am Roboter, beispielsweise an dessen Handgelenk, als besonders vorteilhaft. Ein derartiges System ist beispielsweise in der DE 102006059781.8 sowie in der EP 1 442 848 offenbart.

Aufgrund der zunächst unbekannten Position des losen Objektes im Raum können sich Bilder aus bestimmten Perspektiven von diesem Objekt als untauglich für dessen Positionsermittlung erweisen, insbesondere wenn mehrere derartiger Objekte übereinander geschüttet sind und/oder Teile des Roboters das Objekt für eine Kameraperspektive verdecken. Mittels eines eingangs genannten Systems mit einer am Roboter angeordneten Kamera ist es möglich, aus einer Vielzahl von individuell wählbaren Perspektiven Bilder zu erstellen, was bei fest angeordneten Kameras im Raum nicht möglich ist. Somit lassen sich als für die Positionsermittlung ungeeignete Bilder durch weitere Bilder, welche geeignet sind, substituieren.

Bei der Erstellung mehrerer Bilder aus verschiedenen Perspektiven mittels eines derartigen Systems verfährt der Roboter die Kamera jeweils in die gewünschten Positionen. Von dort aus werden die jeweiligen Bilder im Stillstand des Roboters erstellt, so dass im Unterschied zu fest installierten Kameras nur noch eine am Roboter montierte Kamera notwendig ist.

Andererseits ist der Zeitbedarf für die visuelle Positionserkennung eines Objektes im Raum unter Verwendung von Bilddaten einer an einem Roboter befestigten Kamera aufgrund des Stillstandes des Roboters in verschiedenen Positionen entsprechend erhöht.

Ausgehend von diesem Stand der Technik ist es Aufgabe der Erfindung, ein Verfahren zur Positionserkennung eines Objektes im Raum anzugeben, das mit einer am Roboter befestigten Kamera auskommt und vergleichsweise schnell arbeitet.

Diese Aufgabe wird erfindungsgemäß gelöst durch ein Verfahren zur Ermittlung der Position wenigstens eines innerhalb eines Arbeitsbereiches eines Roboters befindlichen bestimmten Objektes durch ein Auswertesystem, wobei mit einer am Roboter befestigten Kamera ein Bild von wenigstens einem Teil des Arbeitsbereichs des Roboters erstellt wird.

Demgemäß kennzeichnet sich das Verfahren der eingangs genannten Art dadurch, dass das Bild während einer Bewegung der Kamera erstellt wird, dass dem Auswertesystem Bilddaten zusammen mit weiteren Daten, aus welchen die Position und/oder Orientierung der Kamera beim Erstellen des Bildes ableitbar ist, in Echtzeit zugeführt, dass die weiteren Daten im Voraus berechnete Koordinaten der zu erwartenden Position eines in fester örtlicher Relation zur Kamera stehenden Tool Center Punktes des Roboters beim Erstellen des Bildes beinhalten, so dass interne Verzugszeiten bei der Berechnung kompensierbar sind, und dass die Daten zur Positionsermittlung herangezogen werden.

Das Erstellen eines Bildes aus der Bewegung des Roboters heraus vermeidet den durch das Anhalten der Roboterbewegung bedingten Zeitverzug und beschleunigt damit in vorteilhafter Weise den gesamten Prozess der Positionsermittlung.

Eine wesentliche Vereinfachung für das Verwenden eines Bildes zur Positionsermittlung eines Objektes durch ein Auswertesystem ist die Kenntnis des zugehörigen Ortes der Aufnahme in Relation zum Arbeitsbereich und die entsprechende Orientierung der Kamera.

Erfindungsgemäß ist vorgesehen, dass die Bereitstellung der Bilddaten und die Bereitstellung der Roboterkoordinaten in Echtzeit erfolgt, wobei die Daten der Roboterbewegung von der Robotersteuerung zur Verfügung gestellt werden. Der Begriff Echtzeit umfasst auch denjenigen Zeitverzug, der technisch minimal bedingt ist, beispielsweise 5ms bis 50ms. Es ist sowohl denkbar, dem Auswertesystem neben den Bilddaten lediglich die Koordinaten der Kamera oder eines in fester örtlicher Relation zu dieser stehenden Bezugspunktes bei der Bilderstellung zur Verfügung zu stellen, als auch die gesamten Koordinaten des zeitlichen Verlaufs der Kamerabewegung beziehungsweise der Bewegung des Bezugspunktes zusammen mit dem Zeitpunkt der Bilderstellung.

In einer weiteren Ausgestaltung des erfindungsgemäßen Verfahrens werden an wenigstens zwei Orten Bilder erstellt, auf Basis derer mittels des Auswertesystems die Position des wenigstens einen bestimmten Objektes ermittelt wird.

Durch das Verwenden mehrerer Bilder gegebenenfalls sogar aus verschiedenen Perspektiven ist es in vorteilhafter Weise möglich, auch ohne Vorhandensein eventueller geometrischer Randbedingungen, wie beispielsweise, dass ein flaches Objekt sich in einer bekannten Ebene befindet, eine räumliche Positionierung eines Objektes im Arbeitsbereich des Roboters zu ermitteln. Bei mehr als zwei Bildern aus unterschiedlichen Perspektiven dient die überredundante Bildinformation darüber hinaus beispielsweise der Verbesserung der Positionsbestimmung des Objektes.

In einer bevorzugten Ausführungsform des erfindungsgemäßen Verfahrens erfolgt die Ermittlung der Position des wenigstens einen bestimmten Objektes durch das Auswertesystem anhand von Mustererkennung. Hierfür eignen sich beispielsweise dem Fachmann bereits bekannte Algorithmen der geometrischen Merkmalserkennung, der Blob-Analyse, der Stereo-Vison und des optischen Flusses, je nach Anwendung und Randbedingungen.

Dies ermöglicht eine besonders schnelle Ermittlung der Position des Objektes durch das Auswertesystem, so dass der Zeitbedarf noch weiter gesenkt wird.

In einer weiteren Ausgestaltungsform des erfindungsgemäßen Verfahrens wird mittels des Auswertesystems wenigstens ein bestimmtes Objekt ausgewählt, welches nicht oder am wenigsten durch weitere Objekte verdeckt ist.

Somit wird bei Vorhandensein von mehreren Objekten im Arbeitsbereich, welche gegebenenfalls teilweise oder ganz übereinanderliegen, wenigstens ein bestimmtes Objekt ausgewählt, welches zugänglich ist und ohne eine Beeinträchtigung durch weitere Objekte von seiner momentanen Position entnehmbar ist. Die Planung einer zweckmäßigen Reihenfolge für die Auswahl von mehreren Objekten ist hierdurch ermöglicht.

In einer besonders bevorzugten Variante des erfindungsgemäßen Verfahrens wirkt das Auswertesystem mit dem Kontrollsystem für den Roboter zusammen.

Dies ermöglicht in vorteilhafter Weise eine direkte Rückkopplung der durch das Auswertesystem ermittelten Position eines oder mehrerer bestimmter Objekte auf die Bewegung des Roboters und damit einen Regel- bzw. Steuerungskreis. Somit ist es beispielsweise möglich, bei geringer Eignung eines Bildes zur Positionsermittlung eines Objektes ein weiteres Bild aus einer anderen Perspektive zu erstellen, welches besser zur Positionsbestimmung geeignet ist. Es ist in diesem Zusammenhang denkbar, dass das Auswertesystem dem Roboterkontrollsystem Daten einer Kameraposition und deren Orientierung für ein weiterhin zu erstellendes Bild übermittelt. Nachfolgend bewegt der Roboter die Kamera in Richtung der gewünschten Position und es wird beim Überfahren der Position ein weiteres Bild erstellt.

In einer weiteren Ausgestaltung des erfindungsgemäßen Verfahrens wird die Kamera nach Ermittlung der Position und Auswahl eines bestimmten Objektes, welches nicht oder am wenigsten durch weitere Objekte verdeckt ist, mittels des Roboters in Richtung dieses ausgewählten Objektes orientiert und bis zu einem Endpunkt in einem definierten Abstand zum Objekt bewegt, vorzugsweise entlang der optischen Achse der Kamera.

Durch Erreichen der vordefinierten Position der Kamera zum ausgewählten Objekt ist in günstiger Weise ein Ausgangspunkt für weitere Verfahrensschritte erreicht, beispielsweise einen Greifvorgang. Damit verbunden ist eine ebenfalls vordefinierte Position des Handgelenkes des Roboters, sofern die Kamera in vorteilhafter Weise an diesem angebracht ist.

In einer bevorzugten Fortbildung des erfindungsgemäßen Verfahrens wird während der Bewegung zum Endpunkt mittels der Kamera wenigstens ein weiteres Bild erstellt, unter Berücksichtigung dessen durch das Auswertesystem die Position des ausgewählten Objektes erneut berechnet wird.

Aufgrund der während dieser Bewegung reduzierten Distanz der Kamera zum Objekt sind durch das Auswertesystem unter Berücksichtigung eines Bildes des Objektes aus reduzierter Entfernung in vorteilhafter Weise Positionsdaten des Objektes mit erhöhter Qualität ermittelbar.

In einem weiteren Schritt des erfindungsgemäßen Verfahrens wird das Ergebnis der erneuten Berechnung der Position des ausgewählten Objektes von dem Kontrollsystem des Roboters bei der Steuerung der weiteren Bewegung der Kamera bis zum Endpunkt berücksichtigt.

Auf diese Weise wird erreicht, dass eventuelle Ungenauigkeiten bei der Positionsbestimmung des ausgewählten Objektes während der Bewegung der Kamera zum Objekt hin in günstiger Weise reduziert werden.

Die letztgenannten Verfahrensschritte, nämlich aus der Bewegung der Kamera zum ausgewählten Objekt hin ein Bild erstellen, unter Berücksichtigung dessen mittels des Auswertesystems eine erneute Positionsbestimmung des ausgewählten Objektes durchzuführen und die Roboterbewegung über das Roboterkontrollsystem entsprechend des Ergebnisses der erneuten Positionsbestimmung des Objektes anzupassen, sind wiederholbar. Je öfter diese Schritte durchgeführt werden, desto genauer ist die Bewegung des Roboters mit angebrachter Kamera. Die Wiederholrate hängt von der Verarbeitungsgeschwindigkeit des Auswertesystems ab und beträgt beispielsweise 100Hz.

In einer weiteren Ausgestaltung des erfindungsgemäßen Verfahrens wird nach Erreichen des Endpunktes das Objekt mittels eines am Roboter angebrachten Greifmechanismus aufgenommen.

Sowohl die Kamera als auch das am Roboter angebrachte Greifwerkzeug haben im Endpunkt einen definierten Abstand zum Objekt. Dieser Abstand korreliert mit dem Arbeitsbereich des Greifwerkzeuges, so dass ein Greifvorgang aus dieser festen Relativposition durchgeführt wird.

In einer weiteren Ausgestaltung des erfindungsgemäßen Verfahrens wird das aufgenommene Objekt mittels des Roboters an eine andere Stelle transportiert und dort ablegt.

Damit ist in günstiger Weise ein Bewegen eines ausgewählten Objektes aus einer Position in eine weitere Position ermöglicht. Ein solcher Handhabungsvorgang umfasst beispielsweise auch die Bewegung eines Bauteils oder Werkstückes aus einem Anlieferbehälter in eine Einbauposition für eine nachfolgende Montage. Es ist aber auch denkbar, dass der betreffende Roboter selbst für einen oder mehrere nachfolgende nicht näher beschriebene Verfahrensschritte verwendet wird. Ein Ablegvorgang eines Objektes ist vorzugsweise derart durchzuführen, dass das Objekt aus demjenigen Teil des Arbeitsbereiches entfernt wird, in dem sich aufzunehmende Objekte befinden.

In einer besonders bevorzugten Variante des erfindungsgemäßen Verfahrens wird dieses, nämlich die Positionsbestimmung, die Auswahl, die Aufnahme, der Transport und gegebenenfalls die Ablage von Objekten wiederholt, bis sich keine aufzunehmenden Objekte mehr in dem betreffenden Teil des Arbeitsbereiches befinden.

Auf diese Wiese wird ein Teilbereich des Arbeitsbereiches, in welchem sich zu greifende Objekte befinden, komplett geleert. Dies ist beispielsweise ein Anlieferbehälter für eine Vielzahl von Bauteilen, welche sequentiell aus dem Behälter beispielsweise in eine Verbauposition verbrachte werden.

In einer weiteren Variante des erfindungsgemäßen Verfahrens wird bei der Steuerung der Bewegung des Roboters die Störkontur der Kamera und/oder des Greifers berücksichtigt

Auf diese Weise werden Kollisionen der am Roboter angebrachten Vorrichtungen wie Kamera oder Greifer mit im Arbeitsbereich befindlichen Teilen der Vorrichtung oder der Arbeitsumgebung auf einfache Weise vermieden.

In einer weiteren Ausgestaltungsform des erfindungsgemäßen Verfahrens wird mittels einer am Roboter oder der Kamera befestigten Beleuchtungsvorrichtung wenigstens während der Erstellung eines Bildes wenigstens ein Teilbereich des Arbeitsbereiches ausgeleuchtet.

Damit wird in vorteilhafter Weise die Bildqualität des betreffenden Bildes erhöht, womit eine verbesserte Ermittlung der Positionierung eines Objektes durch das Auswertesystem gegeben ist.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein Übersichtsbild eines Positionserkennungssystems mit Roboter
- Fig. 2: ein exemplarisches Ablaufschema zum Leeren eines Behälters

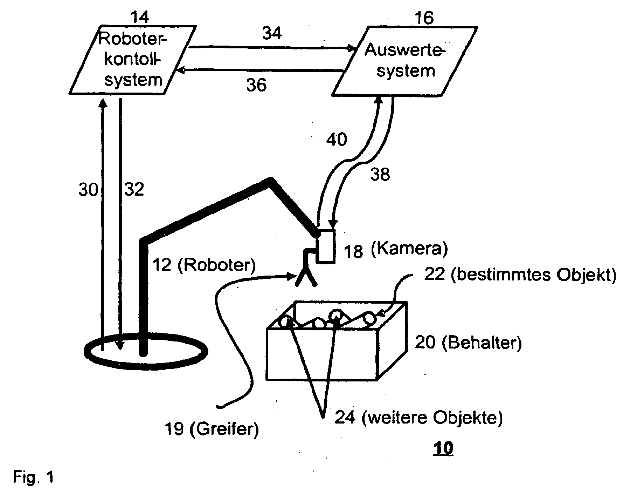

Fig. 1 zeigt eine Variante eines Positionserkennungssystems 10 mit einem Roboter 12, wie es zur Durchführung des erfindungsgemäßen Verfahrens verwendbar ist.

Am Roboter 12 sind an dessen nicht detailliert erkennbarem Handgelenk eine Kamera 18 und ein Greifer 19 angebracht. Es sind aber auch durchaus Anordnungen denkbar, an denen die Kamera 18 und/oder der Greifer 19 nicht am Handgelenk, sondern an einem der Roboterarme befestigt sind. Die Kamera 18 ist optional mit einem nicht gezeigten Beleuchtungssystem versehen, mit welchem ein Teil des Arbeitsbereiches, vorzugsweise in der Verlängerung der optischen Achse der Kamera, ausleuchtbar ist. Ein Beleuchtungssystem ist aber auch unabhängig von der Kamera 18 denkbar.

Die Kamera 18 ist mit ihrer optischen Achse auf den Behälter 20 gerichtet, der den Teil des Arbeitsbereiches des Roboters begrenzt, aus dem bestimmte Objekte 22 gegriffen werden sollen. Es befindet sich eine Vielzahl von Objekten 22, 24 in loser Schüttung im Behälter 20, welche aus einer geeigneten Position mit dem Greifer 19 greifbar sind.

Die Kamera 18 ist über eine fünfte Datenverbindung 38 und eine sechste Datenverbindung 40 mit einem Auswertesystem 16 verbunden. Die fünfte Datenverbindung 38 dient der Übertragung von Daten vom Auswertesystem 16 zur Kamera 18 oder aber auch zum optionalen Beleuchtungssystem. Letztere Daten können beispielsweise Steuerdaten sein, wie beispielsweise ein Triggerimpuls für die Kamera 18 zum Erstellen eines Bildes oder aber auch ein Einschaltsignal für das optionale Beleuchtungssystem. Es sind jedoch auch bidirektionale Datenverbindungen denkbar. Nach Erstellen eines Bildes wird dieses vorzugsweise in der Kamera 18 ungehend in Bilddaten umgewandelt, welche mit einem minimalen Zeitverzug über die sechste Datenverbindung 40 an das Auswertesystem 16 übermittelt werden. Der entstehende Zeitverzug zwischen Erstellen eines Bildes und Abschluss der Datenübertragung ist minimal und beträgt beispielsweise zwischen 5ms und 50ms. Es ist auch denkbar, die Bilddaten vor der Übertragung an das Auswertesystem 16 vorzufiltern und so die zu übertragende Datenmenge zu reduzieren.

Ein Roboterkontrollsystem 14 ist mit dem Roboter 12 über die erste und zweite Datenverbindungen 30 und 32 verbunden. Die zweite Datenverbindung 32 überträgt die jeweiligen Sollbewegungen beziehungsweise Sollpositionen der einzelnen Roboterachsen an den Robotern 12. Die erste Datenverbindung 30 überträgt hingegen beispielsweise die aktuellen Achspositionen der einzelnen Roboterachsen von dem Roboter 12 in das Roboterkontrollsystem 14. Industrieroboter 12 haben heutzutage typischerweise sechs Achsen beziehungsweise Freiheitsgrade, wovon beispielsweise eine Achse für die Drehung der gesamten Roboterbasis verwendet wird, je eine für einen hinteren und einen vorderen Arm und drei Achsen für das Handgelenk. Aber auch eine siebte Achse ist denkbar, wobei der Roboter 12 in diesem Fall auf einer Verfahrschiene angebracht wird. Es sind aber auch Roboter 12 mit deutlich weniger Achsen denkbar, beispielsweise eine vertikal bewegliche Achse mit horizontal angeordnetem Arm, mit welchem darüber hinaus auch eine Drehbewegung ausführbar ist.

Das Roboterkontrollsystem 14 ist über eine dritte Datenverbindung 34 mit dem Auswertesystem 16 verbunden. Über die dritte Datenverbindung 34 werden die Online-Daten der Roboterbewegung an das Auswertesystem 16 übermittelt. Diese Daten entsprechen im gewählten Beispiel nicht den einzelnen Achspositionen, sondern den daraus resultierenden Koordinaten eines festlegbaren sogenannten Tool-Center-Points (TCP) an einem Bezugspunkt des Roboters 12, vorzugsweise an dessen Handgelenk. Die Umrechnung der einzelnen Achswerte zu der Position des TCP erfolgt vorzugsweise im Roboterkontrollsystem 14. Es ist aber durchaus auch denkbar, die einzelnen Achswerte über die dritte Datenverbindung 34 an das Auswertesystem 16 zu übermitteln.

Das Übermitteln der TCP Koordinaten von dem Roboterkontrollsystem 14 zu dem Auswertesystem 16 erfolgt in Echtzeit, d. h. zu jedem Zeitpunkt liegt als Datenwert die exakte Position des TCP an der dritten Datenverbindung 34 an. Technisch bedingt sind dahingehend Einschränkungen zu machen, dass eine derartige Datenübertragung zumeist mit einer festen Frequenz erfolgt, beispielsweise bei einer Frequenz von 1kHz alle 1ms. Trotz derart bedingten Zeitverzugs ist diese Art der Übertragung als online beziehungsweise als in Echtzeit erfolgend anzusehen.

Es ist technisch auch möglich, innerhalb des Roboterkontrollsystems 14 eine Vorausberechnung der zu erwartenden Position des TCP für einen Zeitraum von beispielsweise 100ms im Voraus zu erstellen und online über die dritte Datenverbindung 34 an das Auswertesystem 16 zu übertragen. Eine derartige Vorausberechnung ist anhand der kinematischen Daten des Roboters, dem Bewegungspfad und der Sollgeschwindigkeitsvorgabe realisierbar. Damit sind interne Verzugszeiten bei der Berechnung der TCP Koordinaten aus den Achswerten kompensierbar.

Es ist darüber hinausgehend auch innerhalb des Erfindungsgedankens, die vorausberechneten TCP Koordinaten mit einem Zeitstempel zu versehen und vorauseilend an das Auswertesystem 16 zu übertragen. Es aber auch im Sinne der Erfindung, über die vierte Datenverbindung 36 einen Triggerimpuls für die Kamera 18 auch an das Roboterkontrollsystem 14 zu übertragen und darauf basierend lediglich die TCP Koordinaten zum Triggerzeitpunkt über die dritte Datenverbindung 34 an das Auswertesystem 16 zu übertragen.

Auf diese Weise ist ein möglichst zeitnahes Vorhandensein der Bilddaten und der zugehörigen TCP beziehungsweise Kamerakoordinaten im Auswertesystem 16 gegeben, so dass ein Bild aus der Bewegung der Kamera 18 erstellt und online beziehungsweise in Echtzeit ausgewertet wird.

Die Roboterbewegung muss nach Erstellen eines Bildes in jedem Fall eindeutig bis zu dem Moment vorgegeben sein, an dem die Auswertung des Bildes abgeschlossen ist, aus der gegebenenfalls neue Anforderungen an die TCP Bewegung des Roboters resultieren. Aus diesem Grunde ist eine besonders schnelle Auswertung eines Bildes, wie durch dass erfindungsgemäße Verfahren beschrieben, besonders vorteilhaft.

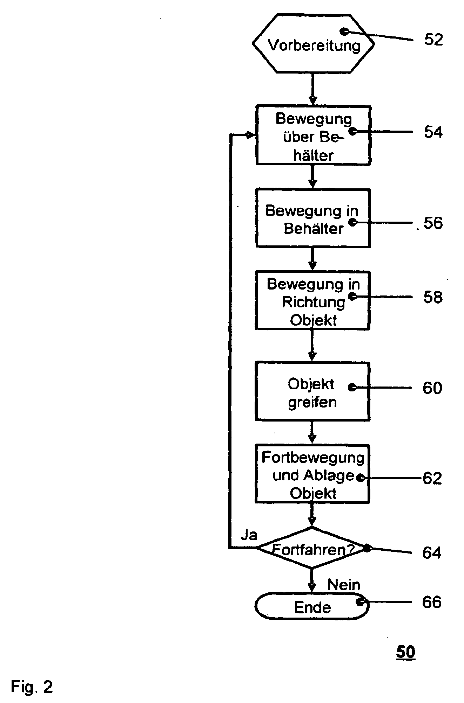

Fig. 2 zeigt ein Ablaufschema 50 für das Leeren eines Behälters 20 mittels eines Positionserkennungssystems mit Roboter 10, wie in Fig. 1 beschrieben, mit dem das erfindungsgemäße Verfahren im Folgenden näher erläutert wird.

Das Verfahren gliedert sich in folgende Schritte:

Ein erster Verfahrensschritt 52 betrifft die vorbereitenden Maßnahmen zur Inbetriebnahme des Positionserkennungssystems 10 mit dem Roboter 12, wie beispielsweise die Definitionen eines Arbeitsbereiches sowie der Ablagepositionen, Kalibrierung der Kamera 18, Festlegung eines Bewegungspfades zu einem ersten Punkt über einem Behälter 20, Definition eines zweiten Punktes über dem Behälter 20, Parametrieren des Roboterkontrollsystems 14.

Ein zweiter Verfahrensschritt 54 betrifft eine Bewegung der Kamera 18 über den Behälter 20. Ein Roboterprogramm wird gestartet und der Roboter 12 bewegt seinen TCP beziehungsweise die Kamera 18 von einer Start - Position zu dem zuvor festgelegten ersten Punkt über dem Behälter 20. Bei Überfahren des ersten Punktes wird ein erstes Bild des Arbeitsbereiches erstellt, dessen Daten zusammen mit den Koordinaten der Kamera 18 bei Erstellung des Bildes dem Auswertesystem 16 zur Verfügung gestellt werden.

Ein dritter Verfahrensschritt:56 betrifft eine Bewegung der Kamera 18 in den Behälter 20. Nach dem Überfahren des ersten Punktes wird der TCP beziehungsweise die Kamera 18 in Richtung des zweiten Punktes bewegt, welcher beispielsweise einen geringeren Abstand zum Behälter 20 aufweist. Das Auswertesystem 16 beginnt mit der Erkennung der im Behälter 20 befindlichen Objekte 22, 24. Optional wird die Erkennung aber auch bereites unmittelbar nach Überfahren des ersten Punktes im Verfahrensschritt 54 gestartet. Ein Erkennungsvorgang beinhaltet vorzugsweise das Erkennen von dem System bereits bekannten Objekten 22, 24 wobei durchaus denkbar ist, dass mehrere verschiedene Arten von Objekten 22, 24 innerhalb des Arbeitsbereiches beziehungsweise dem Behälter 20 vorhanden sind. Optional werden vor Erreichen des zweiten Punktes ein oder mehrere weitere Bilder erstellt, deren Bilddaten ebenfalls zeitnah beziehungsweise online zusammen mit den entsprechenden Kamerakoordinaten dem Auswertesystem 16 zur Verfügung gestellt werden. Vor Erreichen des zweiten Punktes ist ein im Arbeitsbereich beziehungsweise dem Behälter 20 befindlichen greifbares bestimmtes Objekt 22 ausgewählt, welches entweder überhaupt nicht oder zumindest am wenigsten von weiteren Objekten 24 verdeckt ist.

Der wesentliche Unterschied zwischen einem bestimmten Objekt 22 und einem weiteren Objekt 24 besteht darin, dass das bestimmte Objekt 22 beispielsweise bei loser Schüttung mehrerer Objekte 22, 24 in einem Behälter 20 vorwiegend im sichtbaren Bereich befindlich ist und das weitere Objekt 24 teilweise oder komplett durch andere Objekte 22, 24 verdeckt ist, womit dessen Sichtbarkeit zumindest teilweise eingeschränkt ist.

Ein vierter Verfahrensschritt 58 betrifft eine Bewegung der Kamera 18 in Richtung des ausgewählten Objektes 22. Bei Erreichen des zweiten Punktes erfolgt eine Umorientierung des TCP beziehungsweise der Kamera 18 derart, dass die optische Achse der Kamera 18 auf das ausgewählte Objekt 22 gerichtet ist. Optional ist auch eine Drehbewegung der Kamera um deren optische Achse möglich, um eine bestimmte Ausrichtung der Kamera 12 zum ausgewählten Objekt 22 zu realisieren. Die Bewegung der Kamera 18 durch den Roboter 12 erfolgt nun vorzugsweise entlang deren optischen Achse in Richtung des ausgewählten Objektes 22, bis ein Endpunkt mit einem fest vorgegebenen Abstand zum Objekt 22 erreicht ist. Optional werden erfindungsgemäß aus der Bewegung der Kamera 18 weitere Bilder erstellt, deren Daten online zusammen mit weiteren Daten, aus welchen die Kamera- beziehungsweise TCP-Position beim Erstellen des Bildes ableitbar ist, dem Auswertesystem 16 zur Verfügung gestellt. Dieses ermittelt darauf basierend zeitnah, beispielsweise innerhalb von 5ms bis 50ms, erneut die Position des ausgewählten Objektes 22. Diese Positionsdaten werden dem Kontrollsystem 14 des Roboters 12 als neuer Endpunkt der Bewegung, also in Form neuer gegebenenfalls korrigierter Koordinaten, zur Verfügung gestellt und von diesem bei der weiteren Steuerung der Bewegung des Roboters 12 berücksichtigt. Dieser Vorgang ist iterativ wiederholbar. Die Roboterbewegung in Richtung des ausgewählten Objektes 22 stoppt am Endpunkt.

Ein fünfter Verfahrensschritt 60 betrifft die Aufnahme des ausgewählten Objektes 22. Der Aufnahme des ausgewählten Objektes 22 ist optional ein weiterer Prüfvorgang vorangestellt, mit dem die Position des ausgewählten Objektes 22 überprüft wird. Dieser erfolgt beispielsweise mittels eines Sensors. Ein am Roboter 12 angebrachter Greifmechanismus 19, welcher vorzugsweise in einer bestimmten geometrischen Relation zur Kamera 18 steht, nimmt das Objekt aus einer vorgesehenen Position relativ zum ausgewählten Objekt 22 auf, vorzugsweise vom Endpunkt. Es sind vor dem Aufnehmvorgang optional Umorientierungsvorgänge der Kamera 18 und damit auch des Greifwerkzeuges 19 möglich. Es sei in diesem Zusammenhang ausdrücklich erwähnt, dass der Begriff Greifwerkzeug 19 oder Greifmechanismus 19 beispielsweise auch eine Saugvorrichtung 19, welche mittels Unterdruck eine Verbindung zum ausgewählten Objekt 22 herstellt, umfasst. Auch andere Varianten einer lösbaren Verbindung, beispielsweise mittels eines Hakens 19 oder einer Klemmvorrichtung 19 sind im Erfindungsgedanken. Der Aufnahmevorgang wird optional durch weitere Mechanismen überprüft, beispielsweise mittels eines Kraftsensors am Greifmechanismus 19, welcher die zu erwartenden aufzubringenden Greifkräfte mit den tatsächlich gemessenen Kräften vergleicht.

In einem sechsten Verfahrensschritt 62 erfolgt die Fortbewegung des ausgewählten Objektes 22 durch den Roboter 12. Das aufgenommene Objekt 22 wird nun an eine Stelle außerhalb des Teils des Arbeitsbereiches des Roboters 12 bewegt, innerhalb dessen sich aufzunehmende Objekte 22 befinden, und dort abgelegt. Dies beinhaltet beispielsweise auch die Zuführung des aufgenommenen Objektes 22 zu einem weiteren Verarbeitungsschritt, beispielsweise das Verpacken oder das Weiterverarbeiten.

Ein siebter Verfahrensschritt 64 betrifft die Wiederholung des ersten bis sechsten Verfahrensschrittes. Diese werden vorzugsweise solange wiederholt, bis sich keine Objekte 22, 24 mehr in dem Arbeitsbereich des Roboters 12 beziehungsweise in dem Behälter 20 befinden, aus dem Objekte 22, 24 zu entfernen sind. Dies ist der Fall, wenn ein Anlieferbehälter 20 mit Bauteilen 22 leer ist und alle Bauteile der Weiterverarbeitung zugeführt wurden.

In einem achten Verfahrensschritt 66 endet das Verfahren. Spätestens mit Fortbewegung und Ablage des als letzten im Behälter 20 befindlichen Objektes 22 wird der zuvor beschriebene Ablauf beendet.

### Bezugszeichenliste

- 10: Übersichtsbild Positionserkennungssystem mit Roboter
- 12: Roboter
- 14: Roboterkontrollsystem
- 16: Auswertesystem
- 18: Kamera
- 19: Greifer
- 20: Behälter
- 22: bestimmtes Objekt
- 24: weiteres Objekt
- 30: erste Datenverbindung
- 32: zweite Datenverbindung
- 34: dritte Datenverbindung
- 36: vierte Datenverbindung
- 38: fünfte Datenverbindung
- 40: sechste Datenverbindung
- 50: exemplarisches Ablaufschema für das Leeren eines Behälters
- 52: erster Verfahrensschritt
- 54: zweiter Verfahrensschritt
- 56: dritter Verfahrensschritt
- 58: vierter Verfahrensschritt
- 60: fünfter Verfahrensschritt
- 62: sechster Verfahrensschritt
- 64: siebter Verfahrensschritt
- 66: achter Verfahrensschritt

## Patentansprüche

1. Verfahren zur Ermittlung der Position wenigstens eines innerhalb eines Arbeitsbereiches eines Roboters (12) befindlichen Objektes (22) durch ein Auswertesystem (16),
(1.2) wobei der Roboter ein Kontrollsystem (14) aufweist,
(1.3) wobei mit einer am Roboter (12) befestigten Kamera (18) ein Bild von wenigstens einem Teil des Arbeitsbereichs des Roboters (12) erstellt wird,
**dadurch gekennzeichnet**,
(1.4) dass das Bild während einer Bewegung der Kamera (18) erstellt wird,
(1.5) dass dem Auswertesystem (16) Bilddaten zusammen mit weiteren von dem Kontrollsystem (14) zur Verfügung gestellten Daten, aus welchen die Position und/oder Orientierung der Kamera (18) beim Erstellen des Bildes ableitbar ist, in Echtzeit zugeführt und
(1.5a) wobei die weiteren Daten im Voraus berechnete Koordinaten der zu erwartenden Position eines in fester örtlicher Relation zur Kamera (18) stehenden Tool Center Punktes des Roboters (12) beim Erstellen des Bildes beinhalten, so dass interne Verzugszeiten bei der Berechnung kompensierbar sind, und
(1.6) dass die Daten zur Positionsermittlung herangezogen werden.

2. Verfahren gemäß Anspruch 1, **dadurch gekennzeichnet, dass** an wenigstens zwei Orten Bilder erstellt werden, auf Basis derer vom Auswertesystem (16) die Position des wenigstens einen bestimmten Objektes (22) ermittelt wird.

3. Verfahren gemäß *Anspruch 1 oder Anspruch 2*, **dadurch gekennzeichnet, dass** die Position des wenigstens einen bestimmten Objektes (22) durch das Auswertesystem (16) anhand einer Mustererkennung ermittelt wird.

4. Verfahren nach einem der vorangegangenen Ansprüche, **dadurch gekennzeichnet, dass** mittels des Auswertesystems (16) ein bestimmtes Objekt (22) ausgewählt wird, welches nicht oder am wenigsten durch weitere Objekte (22, 24) verdeckt ist.

5. Verfahren nach einem der vorangegangenen Ansprüche, **dadurch gekennzeichnet, dass** das Auswertesystem (16) mit dem Kontrollsystem (14) für den Roboter derart zusammenwirkt, dass eine direkte Rückkopplung der durch das Auswertesystem ermittelten Position eines oder mehrerer Objekte auf die Bewegung des Roboters ermöglicht ist.

6. Verfahren nach einem der *Ansprüche 4 oder 5*, **dadurch gekennzeichnet, dass** die Kamera (18) nach Ermittlung der Position des ausgewählten Objektes (22), mittels des Roboters (12) in Richtung dieses Objektes (22) orientiert wird und bis zu einem Endpunkt in einem definierten Abstand zum ausgewählten Objekt (22) bewegt wird, vorzugsweise entlang der optischen Achse der Kamera (18).

7. Verfahren nach *Anspruch 6*, **dadurch gekennzeichnet, dass** während der Bewegung zum Endpunkt mittels der Kamera (18) weitere Bilddaten erstellt werden, auf deren Basis durch das Auswertesystem (16) die Position des ausgewählten Objektes (22) erneut berechnet wird.

8. Verfahren nach *Anspruch 7*, **dadurch gekennzeichnet, dass** die erneute Berechnung der Position des ausgewählten Objektes (22) von dem Kontrollsystem (14) des Roboters (12) bei der Steuerung der weiteren Bewegung der Kamera (18) bis zum Endpunkt berücksichtigt wird.

9. Verfahren nach einem der *Ansprüche 6 bis 8*, **dadurch gekennzeichnet, dass** durch einen am Roboter (12) angebrachten mechanischen Greifer (19) nach Erreichen des Endpunktes das ausgewählte Objekt (22) aufgenommen wird.

10. Verfahren nach *Anspruch 9*, **dadurch gekennzeichnet, dass** durch den Roboter (12) das aufgenommene Objekt (22) an eine andere Stelle transportiert und gegebenenfalls dort ablegt wird.

11. Verfahren nach *Anspruch 10,* **dadurch gekennzeichnet, dass** die Positionsbestimmung, die Auswahl, die Aufnahme, der Transport und gegebenenfalls die Ablage von Objekten bis zu einem vorbestimmten Abbruchkriterium wiederholt werden.

12. Verfahren nach einem der *Ansprüche 6 bis 11*, **dadurch gekennzeichnet, dass** bei der Steuerung der Bewegung des Roboters (22) durch das Roboterkontrollsystem (14) eine Störkontur der Kamera (18) und/oder des Greifers (19) berücksichtigt wird.

13. Verfahren nach einem der vorangegangenen Ansprüche, **dadurch gekennzeichnet, dass** mittels einer am Roboter (12) oder der Kamera (18) befestigten Beleuchtungsvorrichtung wenigstens während der Erstellung eines Bildes wenigs tens ein Teilbereich des Arbeitsbereiches ausgeleuchtet wird.

## Claims

1. Method for determining the position of at least one object (22), which is located within a working area of a robot (12), by an evaluation system (16), wherein the robot has a monitoring system (14), wherein a camera (18) which is attached to the robot (12) creates an image of at least a part of the working area of the robot (12), **characterized in that** the image is created during a movement of the camera (18), **in that** image data is supplied in real time to the evaluation system (16) together with further data provided by the monitoring system (14) from which the position and/or orientation of the camera (18) during creation of the image can be derived, and wherein the further data comprises previously calculated coordinates of the expected position of a tool centre point - which is in a fixed spatial relation with the camera (18) - of the robot (12) during image creation, such that it is possible to compensate for internal delay times during the calculation, and **in that** the data is used for position determination.

2. Method according to Claim 1, **characterized in that** images are created at at least two locations, on the basis of which images the evaluation system (16) determines the position of the at least one specific object (22).

3. Method according to Claim 1 or Claim 2, **characterized in that** the position of the at least one specific object (22) is determined by the evaluation system (16) on the basis of pattern recognition.

4. Method according to one of the preceding claims, **characterized in that** a specific object (22) which is not concealed or is at least concealed by further objects (22, 24) is selected by means of the evaluation system (16).

5. Method according to one of the preceding claims, **characterized in that** the evaluation system (16) interacts with the monitoring system (14) for the robot so as to allow direct feedback of the position, as determined by the evaluation system, of one or more objects to the movement of the robot.

6. Method according to one of Claims 4 or 5, **characterized in that**, after determining the position of the selected object (22), the camera (18) is oriented by means of the robot (12) in the direction of this object (22), and is moved to an end point at a defined distance from the selected object (22), preferably along the optical axis of the camera (18).

7. Method according to Claim 6, **characterized in that** further image data is created during the movement to the end point by means of the camera (18), on the basis of which the evaluation system (16) recalculates the position of the selected object (22).

8. Method according to Claim 7, **characterized in that** the recalculation of the position of the selected object (22) is taken into account by the monitoring system (14) of the robot (12) for controlling the further movement of the camera (18) to the end point.

9. Method according to one of Claims 6 to 8, **characterized in that** the selected object (22) is picked up by a mechanical gripper (19), which is fitted to the robot (12), after reaching the end point.

10. Method according to Claim 9, **characterized in that** the picked-up object (22) is transported to a different point, where it may be placed down, by the robot (12).

11. Method according to Claim 10, **characterized in that** the position determination, the selection, the picking up, the transport and possibly the placing down of objects are repeated until a predetermined termination criterion is reached.

12. Method according to one of Claims 6 to 11, **characterized in that** a disturbance contour of the camera (18) and/or of the gripper (19) is taken into account by the robot monitoring system (14) in the control of the movement of the robot (12).

13. Method according to one of the preceding claims, **characterized in that** at least one subarea of the working area is illuminated by means of an illumination apparatus, which is attached to the robot (12) or to the camera (18), at least during the creation of an image.

## Revendications

1. Procédé pour déterminer la position d'au moins un objet (22) se trouvant à l'intérieur d'une zone de travail d'un robot (12) par un système d'analyse (16), le robot présentant un système de contrôle (14), une image d'au moins une partie de la zone de travail du robot (12) étant élaborée avec une caméra (18) fixée sur le robot (12), **caractérisé en ce que** l'image est élaborée pendant un déplacement de la caméra (18), **en ce que** des données d'image sont amenées en temps réel au système d'analyse (16) en même temps que d'autres données mises à disposition par le système de contrôle (14), à partir desquelles la position et/ou l'orientation de la caméra (18) peut (peuvent) être déduite(s) lors de l'élaboration de l'image, et les autres données contenant des coordonnées calculées à l'avance de la position à laquelle l'on peut s'attendre d'un point central d'outil (tool center point) du robot (12) en relation locale fixe par rapport à la caméra (18) lors de l'élaboration de l'image, de telle sorte que des temps de retard internes puissent être compensés lors du calcul, et **en ce que** les données sont utilisées pour la détermination de la position.

2. Procédé selon la revendication 1, **caractérisé en ce que** des images, sur la base desquelles le système d'analyse (16) détermine la position de l'au moins un objet (22) défini, sont élaborées en au moins deux endroits.

3. Procédé selon la revendication 1 ou la revendication 2, **caractérisé en ce que** la position de l'au moins un objet (22) défini est déterminée par le système d' analyse (16) à l' aide d'une reconnaissance de modèle.

4. Procédé selon l'une quelconque des revendications précédentes, **caractérisé en ce qu'**un objet (22) défini, qui n'est pas masqué ou est masqué au moins par d'autres objets (22, 24), est sélectionné au moyen du système d' analyse (16).

5. Procédé selon l'une quelconque des revendications précédentes, **caractérisé en ce que** le système d'analyse (16) coopère avec le système de contrôle (14) pour le robot de telle sorte qu'une réaction directe de la position, déterminée par le système d'analyse, d'un ou de plusieurs objets au déplacement du robot soit rendue possible.

6. Procédé selon l'une quelconque des revendications 4 ou 5, **caractérisé en ce que** la caméra (18) est orientée, après détermination de la position de l'objet (22) sélectionné, au moyen du robot (12) en direction de cet objet (22) et est déplacée jusqu'à un point final à une distance définie de l'objet (22) sélectionné, de préférence le long de l'axe optique de la caméra (18).

7. Procédé selon la revendication 6, **caractérisé en ce que** d'autres données d'image, sur la base desquelles le système d'analyse (16) calcule à nouveau la position de l'objet (22) sélectionné, sont élaborées pendant le déplacement jusqu'au point final au moyen de la caméra (18).

8. Procédé selon la revendication 7, **caractérisé en ce que** le calcul renouvelé de la position de l'objet (22) sélectionné est pris en compte par le système de contrôle (14) du robot (12) lors de la commande du déplacement ultérieur de la caméra (18) jusqu'au point final.

9. Procédé selon l'une quelconque des revendications 6 à 8, **caractérisé en ce que** l'objet (22) sélectionné est saisi par une pince (19) mécanique placée sur le robot (12) après avoir atteint le point final.

10. Procédé selon la revendication 9, **caractérisé en ce que** l'objet (22) saisi est transporté par le robot (12) en un autre endroit et y est éventuellement déposé.

11. Procédé selon la revendication 10, **caractérisé en ce que** la détermination de la position, le choix, la saisie, le transport et éventuellement la dépose d'objets sont répétés jusqu'à un critère d'interruption prédéfini.

12. Procédé selon l'une quelconque des revendications 6 à 11, **caractérisé en ce que**, lors de la commande du déplacement du robot (12) par le système de contrôle du robot (14), un contour perturbateur de la caméra (18) et/ou de la pince (19) est pris en compte.

13. Procédé selon l'une quelconque des revendications précédentes, **caractérisé en ce qu'**au moins une zone partielle de la zone de travail est éclairée au moyen d'un dispositif d'éclairage fixé sur le robot (12) ou la caméra (18) au moins pendant l'élaboration d'une image.
